# EUROPEAN PATENT APPLICATION

(11) **EP 1 956 863 A2**
(43) Date of publication of application: **13.08.2008**
(21) Application number: 08101277.5
(22) Date of filing: 05.02.2008
(51) Int. Cl.: H04Q 7/38

(54) **User equipment, radio network controller, and method for controlling user equipment**

(30) Priority: 08.02.2007 JP
(71) Applicant: FUJITSU LIMITED, Kawasaki-shi, Kanagawa 211-8588 (JP)
(72) Inventor: Fujii, Hiroyuki c/o FUJITSU LIMITED, Kawasaki-shi, Kanagawa 211-8588 (JP)
(74) Representative: Stebbing, Timothy Charles

(57) **Abstract**

The present invention relates to user equipment(103) that includes a transmitting/receiving unit that transmits/receives information to/from a base transceiver station (102) of a cell where the user equipment is located. Also included is a control unit that controls a specific operation while the user equipment (103) is located in the cell by receiving specific operation information to start the specific operation via the transmitting/receiving unit.

## Description

The present invention relates to user equipment and a radio network controller included in a radio communication system, and to a method for controlling the user equipment. Particularly, the present invention relates to user equipment, a radio network controller, and a method for controlling the user equipment in which the user equipment located in a specific cell performs a specific operation.

The prior art includes, for example, a radio communication system, such as IMT-2000 (W-CDMA), that includes a radio network controller, a base transceiver station, and user equipment. The user equipment performs radio communication with the base transceiver station so as to perform a communication service, *e.g.*, make a call or transmit/receive information including data. The radio network controller controls a plurality of downstream base transceiver stations. Hereafter, the radio network controller is referred to as "RNC," the base transceiver station is referred to as "BTS," and the user equipment is referred to as "UE."

According to a technique related to the radio communication system, the RNC transmits a setting request to UE located in a downstream cell so as to set connection, and the UE sets connection with the RNC. Accordingly, the RNC manages information of the UE located in the downstream cell.

However, the technique described in Japanese Laid-Open Patent Publication No. 2005-65260 can be applied only to a configuration in which the RNC recognizes information of the UE located in a cell and sets a communication connection. Thus, the RNC cannot control the UE to allow the UE to perform a specific operation.

According to an aspect of embodiments, user equipment comprises a transmitting/receiving unit that transmits/receives information to/from a base transceiver station of a cell where the user equipment is located. Also included is a control unit that controls a specific operation while the user equipment is located in the cell by receiving specific operation information to start the specific operation via the transmitting/receiving unit.

According to another aspect, the present invention provides a method for controlling user equipment, comprising: controlling an operation of a function of the user equipment in accordance with a cell where the user equipment is located; transmitting/receiving a message between the user equipment and a radio network controller at entrance or exit of the user equipment to/from the cell; and performing a specific operation of a function of the user equipment based on specific operation information included in the message while the user equipment is located in a cell.

The invention also provides a computer program for carrying out the method described above, and a computer-readable medium having the program stored thereon.

Reference is made, by way of example only, to the accompanying drawings in which:
Fig. 1 shows a configuration of a radio communication system embodying the present invention;
Fig. 2 is a block diagram showing a preferred embodiment of an internal configuration of an RNC;
Fig. 3 is a block diagram showing a preferred embodiment of an internal configuration of UE;
Fig. 4 shows message parameters used in the preferred embodiment of the radio communication system;
Fig. 5 shows an exemplary sequence of performing a specific operation at registration of a position;
Fig. 6 shows an exemplary sequence of performing a specific operation at handover;
Fig. 7 shows an exemplary sequence of performing a specific operation at cell update;
Fig. 8 is an exemplary flowchart showing control of a specific operation in the RNC;
Fig. 9 is an exemplary flowchart showing control of a specific operation in the UE;
Fig. 10 is an exemplary flowchart showing a process of a specific operation in the UE; and
Fig. 11 shows each exemplary operation of the UE in accordance with a communication state and a position state in a specific operation cell.

Hereinafter, a preferred embodiment of this system is described with reference to the attached drawings.

Conventionally, an RNC cannot allow UE that exists in a specific cell, such as a site or a floor, to perform a specific operation. For example, if the specific cell is a site of an event, the user of the UE needs to manually set the UE to a silent mode so that the event is not disturbed. This specific operation needs to be voluntarily performed by the user owning the UE, and thus it is possible that the user forgets to set the silent mode or that the user does not set the silent mode intentionally. In that case, an undesirable situation occurs, that is, the UE rings in the site of the event. Also, after the user has gone out of the specific cell, such as the site of the event, the user needs to manually cancel the specific operation, which is inconvenient for the user.

The same inconvenience occurs in a case where a camera function included in UE is temporarily set to an unusable mode so that shooting cannot be performed in a concert hall. In those cases described above, a specific operation of restricting a function of UE located in a specific site is performed by a user, and thus the function cannot reliably be restricted. Canceling of the restriction of UE upon leaving a specific site is also left to an operation by the user, but the user is likely to forget to cancel the restriction.

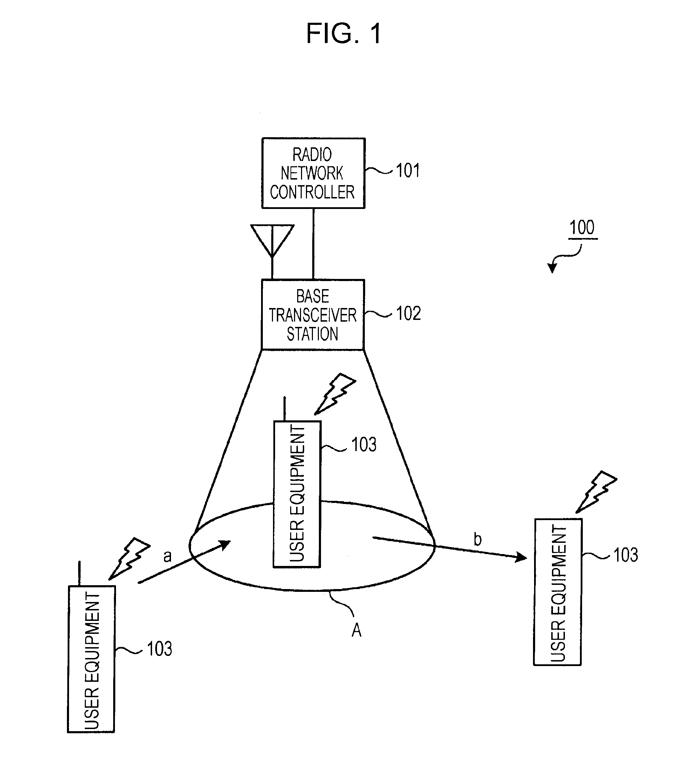

An outline of an exemplary operation according to one embodiment is described with reference to Fig. 1. In this embodiment, a radio communication system 100 includes an RNC 101, a BTS 102, and UE 103.

According to one aspect, the BTS 102 has a cell A of a predetermined range and communicates with the UE 103. The RNC 101 allows the UE 103 located in the specific cell A to perform a specific operation of the UE 103. The specific operation is preferably preset. For example, assume that the cell A is a place for a lecture where the UE 103 is recommended to be in a silent mode. In this case, the RNC 101 allows the UE 103 that has entered cell A (indicated by an arrow "a") to be set in a silent mode. Also, the RNC 101 allows the UE 103 that is out of cell A (indicated by an arrow "b") to cancel the silent mode.

The above-described control is performed by providing a control command from the RNC 101 to the UE 103. This is automatically performed without setting of the silent mode by the user of the UE 103. The specific operation of the UE 103 is not limited to the silent mode, and any necessary operation can be preset in each cell.

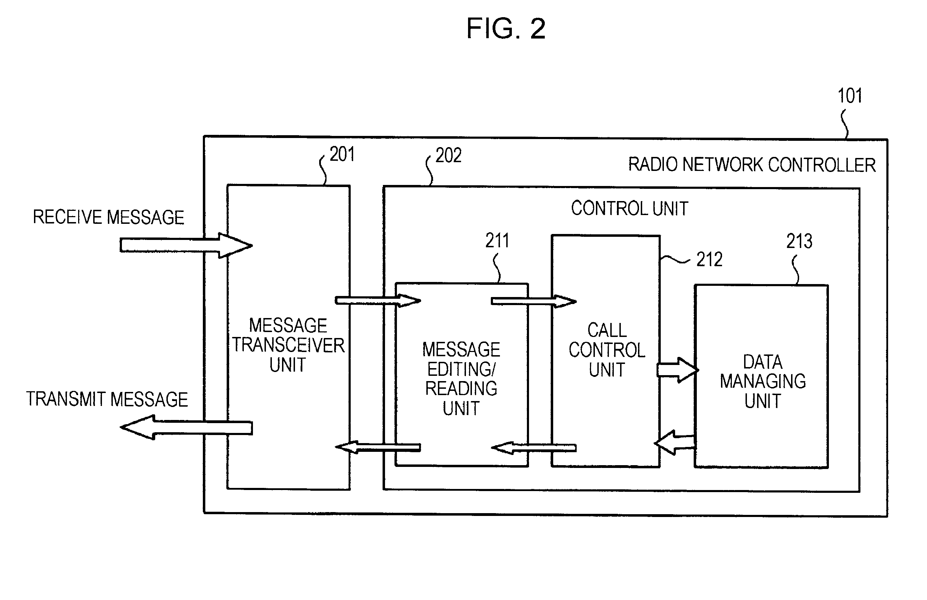

Fig. 2 shows exemplary elements of the RNC 101 mainly related to execution of a specific operation to the UE 103 shown in Fig. 1. According to this embodiment, the RNC 101 includes a message transceiver unit 201 and a control unit 202. The control unit 202 includes a message editing/reading unit 211, a call control unit 212, and a data managing unit 213.

The message transceiver unit 201 receives/transmits a message from/to the UE 103 via the BTS 102. The message received by the message transceiver unit 201 is read by the message editing/reading unit 211 and is output to the call control unit 212. The call control unit 212 performs a call operation for connection based on management information stored in the data managing unit 213 in accordance with the message from the UE 103. In addition, the data managing unit 213 has an area to store the message received from the UE 103. Also, information of specific operations in respective cells of the BTS 102 is preset in a table form in the data managing unit 213, which outputs information of a specific operation necessary in the cell of the BTS 102 where the UE 103 is located by reading specific operation information included in the message received from the UE 103.

It is desirable for the call control unit 212 to allow the message editing/reading unit 211 to edit the message so that the UE 103 located in a specific cell performs a specific operation. The edited message is then transmitted from the message transceiver unit 201 to the UE 103.

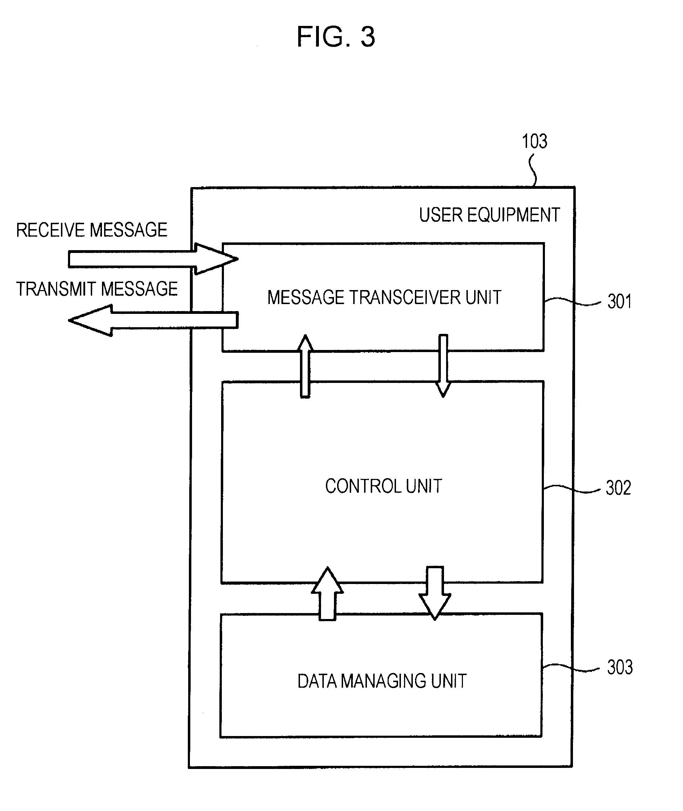

Fig. 3 shows exemplary elements of the UE 103 mainly related to execution of a specific operation shown in Fig. 1. According to this aspect of the embodiment, the UE 103 includes a message transceiver unit 301, a control unit 302, and a data managing unit 303.

In one embodiment, the message transceiver unit 301 receives/transmits a message from/to the RNC 101 via the BTS 102. When the UE 103 is located in a specific cell, the control unit 302 transmits a connection request via the message transceiver unit 301. In response to the connection request, the RNC 101 performs a connection process to the UE 103. When the UE 103 is located in a specific cell, the RNC 101 adds information of a specific operation to the response and transmits the response.

The message transceiver unit 301 of the UE 103 receives a message and outputs the message to the control unit 302. It is desirable for the control unit 302 to perform a connection process based on management information stored in the data managing unit 303. Information about specific operations is preset as the management information in the data managing unit 303. When a value of a specific operation is preset in the received message, the control unit 302 performs the specific operation corresponding to the value stored in the data managing unit 303. After the UE 103 has gone out of the specific cell, the control unit 302 cancels the specific operation that has been performed till then.

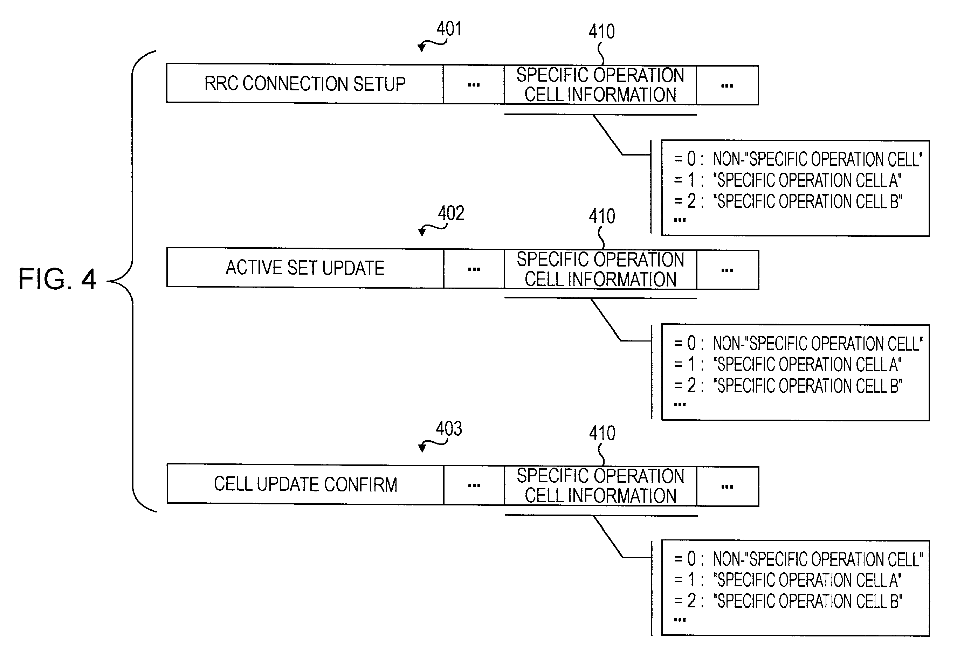

Fig. 4 illustrates exemplary message parameters that may be transmitted from the RNC 101 to the UE 103.

The messages include a "RRC CONNECTION SETUP" 401 message that is transmitted from the RNC 101 during an idle state, for example, while the position of the UE 103 is being registered. Another message that may be included is a "ACTIVE SET UPDATE" 402 message that is transmitted from the RNC 101 while the UE 103 is performing communication, and while handover (HO) is being performed in a dedicated channel state. In addition, a "CELL UPDATE CONFIRM" 403 message that is transmitted from the RNC 101 while the UE 103 is performing communication and while cell update is being performed in a common channel state. These are general-purpose messages.

In this embodiment, when the BTS 102 managed by the RNC 101 has a cell requiring a specific operation, the RNC 101 adds specific operation cell information 410 to provide instructions to perform a predetermined specific operation to one of the above-described messages and transmits the message to the UE 103. The control unit 302 of the UE 103 performs a specific operation set in each cell with reference to the table based on the specific operation cell information 410 included in the message.

The specific operation cell information 410 is a value of 0, 1, 2, or the like given in bit information. For example, when the value of the specific operation cell information 410 is 0, it means a non-"specific operation cell," where the UE 103 performs no specific operation. When the value of the specific operation cell information 410 is 1, it means "specific operation cell A," where the UE 103 performs an operation A. When the value of the specific operation cell information 410 is 2, it means "specific operation cell B," where the UE 103 performs an operation B. The value of the specific operation cell information 410 may also be 3, 4, 5, ···. In this way, the specific operation cell information 410 can comprise bits corresponding to the types of necessary specific operation. Since the specific operation cell information 410 is bit data, a non-used area in a message can be used. According to this embodiment, the specific operation cell information 410 can be given in a minimum data amount, so that the amount of communication data does not increase.

### Specific Operation After Idle State

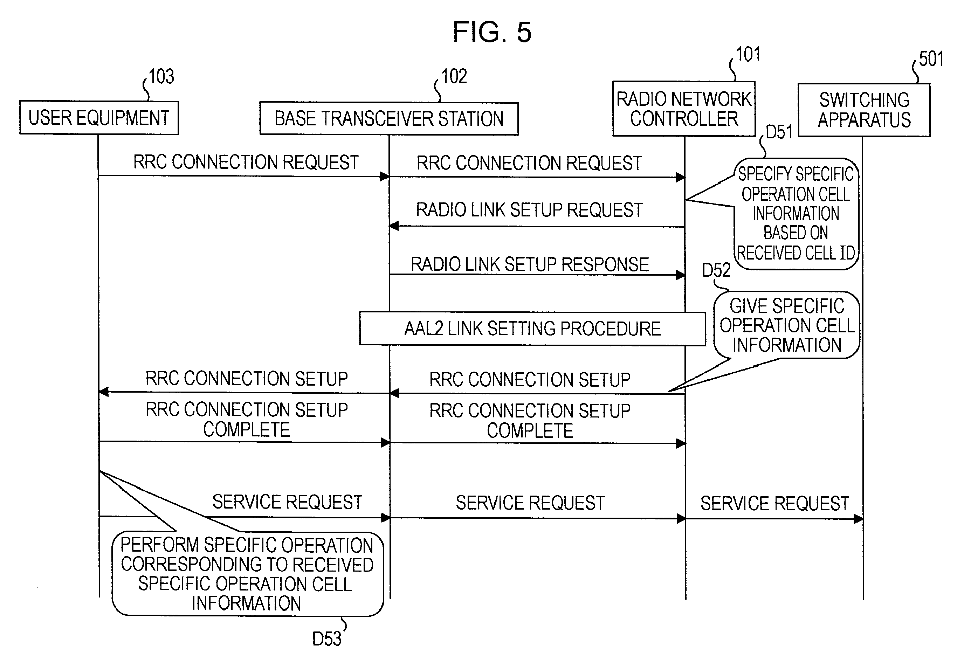

Hereinafter, control of a specific operation in each state of the UE 103 is described with reference to Fig. 5. The figure shows an exemplary case where the UE 103 is not communicating and is in an idle state. Since the UE 103 is not communicating, a specific operation is performed when a position registering procedure or a call transmitting/receiving procedure is performed.

More specifically, "RRC CONNECTION REQUEST" transmitted from the UE 103 is transmitted to the RNC 101 via the BTS 102. At this time, the RNC 101 determines a connected cell based on a cell ID included in the message. After determining the connected cell, the RNC 101 specifies the specific operation cell information of the connected cell based on the management information managed by the data managing unit 213 (D51). Then, the RNC 101 gives the value of the specified specific operation cell information to the specific operation cell information 410 in the "RRC CONNECTION SETUP" 401 (D52). Thereafter, the RNC 101 transmits the "RRC CONNECTION SETUP" 401 to the UE 103 via the BTS 102.

In one embodiment, the UE 103 receives the "RRC CONNECTION SETUP" 401 and refers to the value of the specific operation cell information 410 included in the "RRC CONNECTION SETUP" 401. The UE 103 preferably refers to the table in the data managing unit 303 in the UE 103 and performs the specific operation corresponding to the value of the specific operation cell information 410 (D53). Moreover, the UE 103 transmits "SERVICE REQUEST" after transmitting "RRC CONNECTION SETUP COMPLETE." It is also desirable for the "SERVICE REQUEST" to be transmitted to a switching apparatus 501.

### Exemplary Operation During Communication

According to one aspect, the UE 103 performs communication in either of two states: a dedicated channel state of voice communication or the like; and a common channel state of data transmission or the like. During communication in the dedicated channel state, a specific operation is performed by a handover procedure. During communication in the common channel state, a specific operation is performed by a cell update procedure.

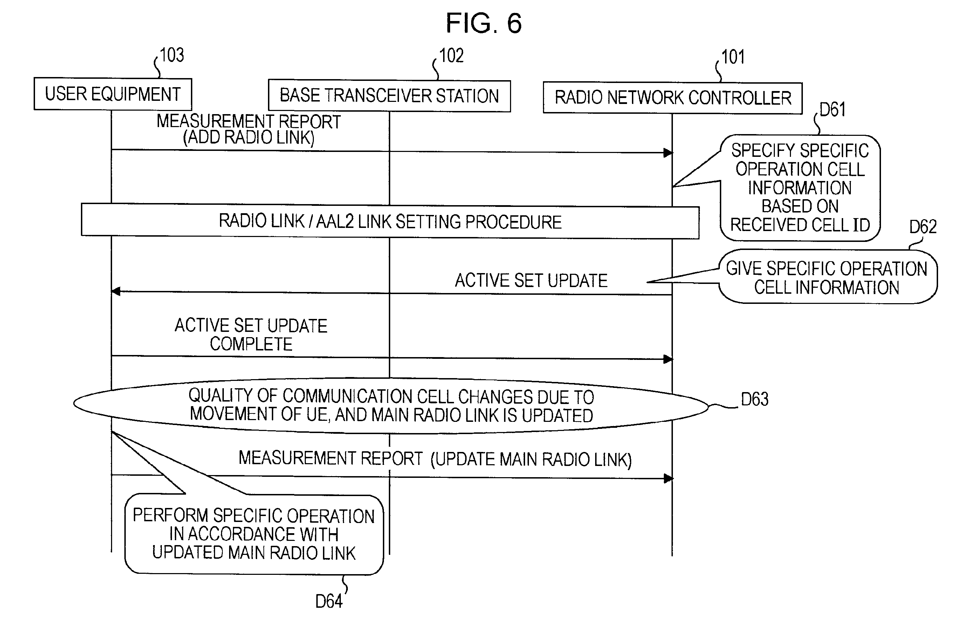

Fig. 6 shows an exemplary case where communication is being performed in the dedicated channel state. In this embodiment, the UE 103 transmits "MEASUREMENT REPORT" to the RNC 101. The RNC 101 determines an additional cell after handover based on the "MEASUREMENT REPORT." After determining the additional cell, the RNC 101 specifies the specific operation cell information of the determined additional cell in the management information managed by the data managing unit 213 (D61).

The RNC 101 then gives the value of the specified specific operation cell information to the specific operation cell information 410 in the "ACTIVE SET UPDATE" 402 (D62) and transmits the "ACTIVE SET UPDATE" 402 to the UE 103.

Once the UE 103 receives the "ACTIVE SET UPDATE" 402, it refers to the value of the specific operation cell information 410 included in the "ACTIVE SET UPDATE" 402 and stores the value in the data managing unit 303 in the UE 103. In the handover procedure, it is possible that the UE 103 has not entered the additional cell, and thus a specific operation is not immediately performed.

Then, movement or the like of the UE 103 causes a change in quality of the communication cell. After the handover procedure is complete, the quality of "Radio Link" in the communication measured by the UE 103 changes, and "Main Radio Link" is updated to new "Main Radio Link" (D63). In this state, communication is performed in both the new and old cells. In accordance with the update, the UE 103 refers to the specific operation cell information 410 of the new "Main Radio Link" in the table of the data managing unit 303. As a result of the reference, if the cell connected to the new "Main Radio Link" is a specific operation cell, a specific operation corresponding to the value is performed (D64). Accordingly, the specific operation is performed after the UE 103 has completely entered the new cell. Then, the UE 103 transmits "MEASUREMENT REPORT" including the new "Main Radio Link."

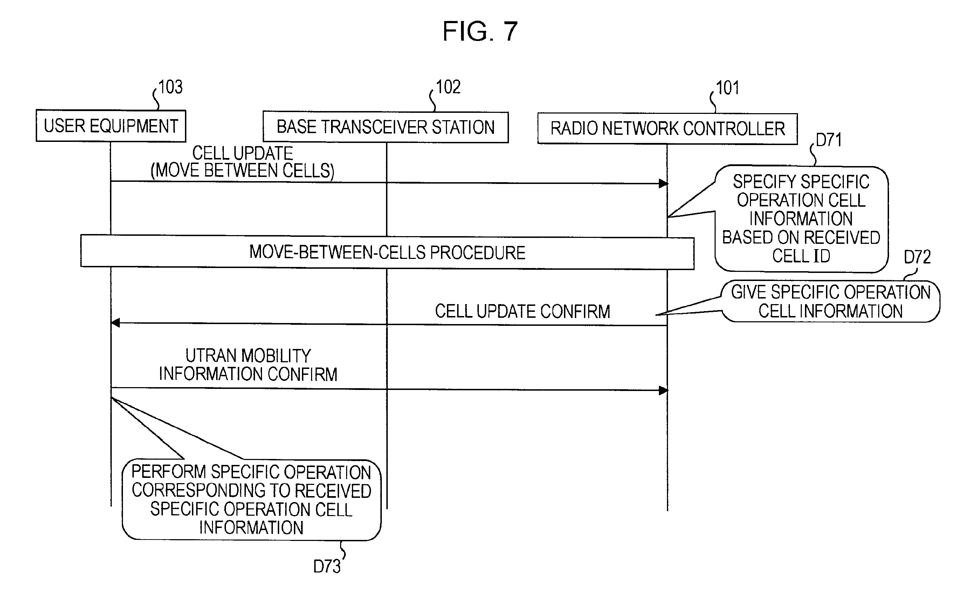

Fig. 7 shows an exemplary case where communication is being performed in the common channel state. In the cell update procedure, the RNC 101 determines an additional cell after handover based on information transmitted from the UE 103 in "CELL UPDATE." After determining the additional cell, the RNC 101 specifies the specific operation cell information of the determined additional cell in the management information managed by the data managing unit 213 (D71).

Then, the RNC 101 gives the value of the specified specific operation cell information to the specific operation cell information 410 in the "CELL UPDATE CONFIRM" 403 (D72) and transmits the "CELL UPDATE CONFIRM" 403 to the UE 103.

The UE 103 receives the "CELL UPDATE CONFIRM" 403, refers to the value of the specific operation cell information 410 included in the "CELL UPDATE CONFIRM" 403, and stores the value in the data managing unit 303 in the UE 103. Then, the UE 103 performs a specific operation corresponding to the value of the specific operation cell information 410 with reference to the table in the data managing unit 303 (D73). Then, the UE 103 transmits "UTRAN MOBILITY INFORMATION CONFIRM."

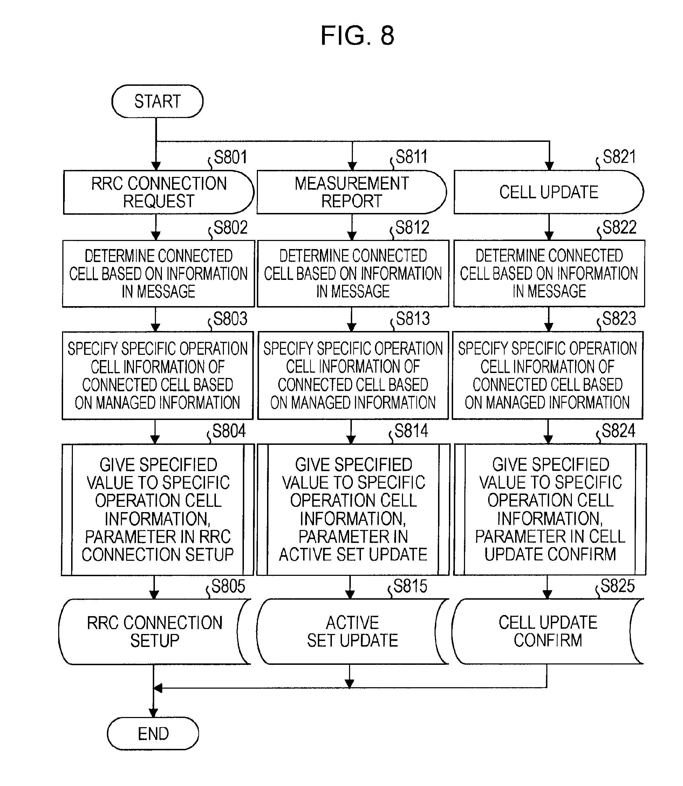

Fig. 8 shows the exemplary control performed by the RNC 101 in the above-described sequence. The RNC 101 waits for a message transmitted from the UE 103.

First, when a received message is "RRC CONNECTION REQUEST" (step S801), the control unit 202 determines a connected cell based on information included in the message (step S802). The control unit 202 subsequently specifies the specific operation cell information of the connected cell based on the information managed by the data managing unit 213 (step S803, D51 in Fig. 5). Thereafter, the control unit 202 gives the value specified in step S803 to the specific operation cell information 410, a parameter in the "RRC CONNECTION SETUP" 401 (step S804). The control unit 202 transmits the "RRC CONNECTION SETUP" 401 to the UE 103 (step S805).

Second, when a received message is "MEASUREMENT REPORT" (step S811), the control unit 202 determines a connected cell based on information included in the message (step S812). Preferably, the control unit 202 specifies the specific operation cell information of the connected cell based on the information managed by the data managing unit 213 (step S813, D61 in Fig. 6). The control unit 202 then gives the value specified in step S813 to the specific operation cell information 410, a parameter in the "ACTIVE SET UPDATE" 402 (step S814). The control unit 202 transmits the "ACTIVE SET UPDATE" 402 to the UE 103 (step S815).

Third, when a received message is "CELL UPDATE" (step S821), the control unit 202 determines a connected cell based on information included in the message (step S822). The specific operation cell information of the connected cell is specified by the control unit 202 based on the information managed by the data managing unit 213 (step S823, D71 in Fig. 7). The control unit 202 then gives the value specified in step S823 to the specific operation cell information 410, which is a parameter in the "CELL UPDATE CONFIRM" 403 (step S824). It is desirable for the control unit 202 to transmit the "CELL UPDATE CONFIRM" 403 to the UE 103 (step S825).

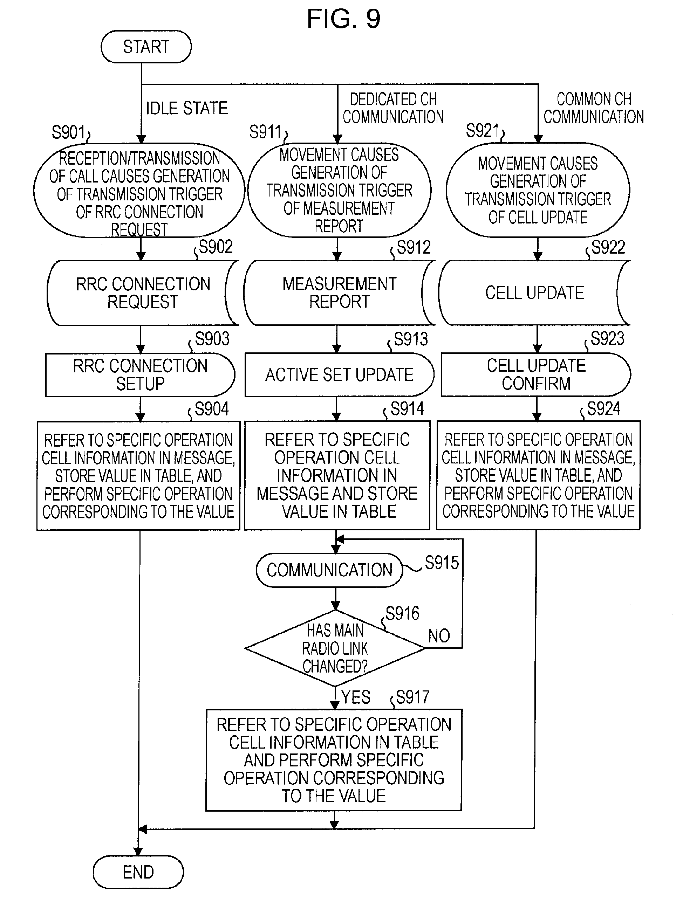

Fig. 9 shows the exemplary control performed in the UE 103 in the above-described sequence. In this aspect of the embodiment, the UE 103 may be in an idle state or a communicating state.

In an idle state, transmission or reception of a call in the UE 103 causes the control unit 302 to generate a transmission trigger of "RRC CONNECTION REQUEST" (step S901), and the control unit 302 transmits the "RRR CONNECTION REQUEST" (step S902). Then, the control unit 302 receives the "RRC CONNECTION SETUP" 401 (step S903). The control unit 302 refers to the specific operation cell information 410, a parameter in the "RRC CONNECTION SETUP" 401, to obtain a value, and stores the value in the table in the data managing unit 303. The control unit 302 then performs a specific operation corresponding to the value of the specific operation cell information 410 (step S904, D53 in Fig. 5).

Alternately, during dedicated channel communication, movement of the UE 103 causes the control unit 302 to generate a transmission trigger of "MEASUREMENT REPORT" (step S911), and the control unit 302 transmits the "MEASUREMENT REPORT" (step S912). Then, the control unit 302 receives the "ACTIVE SET UPDATE" 402 (step S913). The control unit 302 subsequently refers to the specific operation cell information 410, a parameter in the "ACTIVE SET UPDATE" 402, to obtain a value, and stores the value in the table in the data managing unit 303 (step S914).

During communication, the quality of the "Radio Link" changes in accordance with movement (step S915), and the "Main Radio Link" also changes in accordance with the change in quality (step S916). The state of the "Main Radio Link" changes from no change ("NO" loop in step S916) to change to new "Main Radio Link" ("YES" loop in step S916). Accordingly, the control unit 302 refers to the specific operation cell information 410 of the new "Main Radio Link" in the table in the data managing unit 303 to obtain a value, and performs a specific operation corresponding to the value (step S917, D64 in Fig. 6).

During common channel communication, movement of the UE 103 causes the control unit 302 to generate a transmission trigger of "CELL UPDATE" (step S921), and the control unit 302 transmits the "CELL UPDATE" (step S922). The control unit 302 then receives the "CELL UPDATE CONFIRM" 403 (step S923). In addition, the control unit 302 refers to the specific operation cell information 410, a parameter in the "CELL UPDATE CONFIRM" 403, to obtain a value, and stores the value in the table in the data managing unit 303. The control unit 302 then performs a specific operation corresponding to the value of the specific operation cell information 410 (step S924, D73 in Fig. 7).

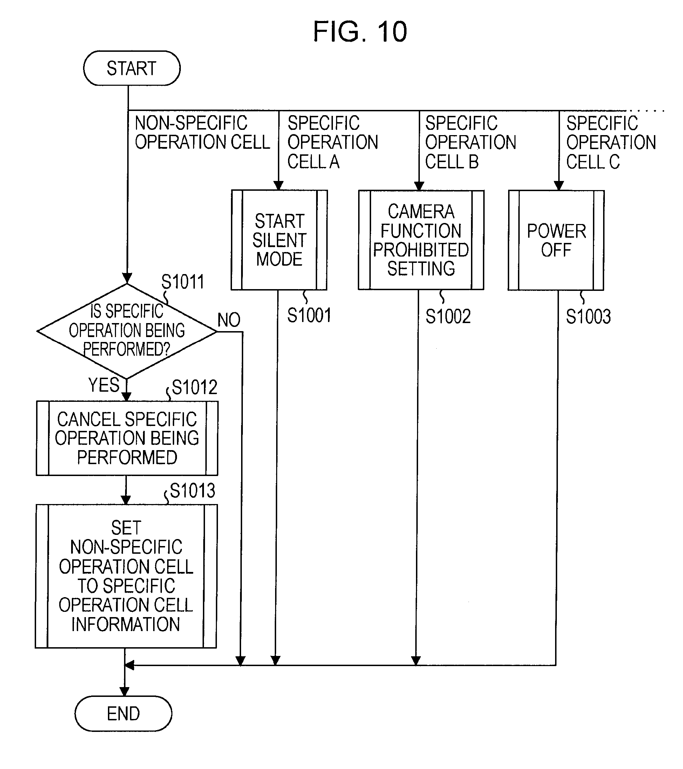

In accordance with the exemplary flowchart shown in Fig. 10, respective processes corresponding to the values (0, 1, 2, ···) of the specific operation cell information 410, a parameter in a message, are performed in the UE 103.

When the cell of the BTS 102 where the UE 103 is located is a specific cell and when the value of the specific operation cell information 410 indicates specific operation cell A, the data managing unit 303 performs "start silent mode" that is set as a specific operation in the management information table (step S1001), and the process ends. Accordingly, when being located in the specific cell, the UE 103 is automatically set to a silent mode even if the user does not set it, and thus manners can be observed in a place of a lecture or the like.

When the value of the specific operation cell information 410 indicates specific operation cell B, the data managing unit 303 performs "camera function prohibited setting" that is set as a specific operation in the management information table (step S1002), and the process ends. Accordingly, when being located in the specific cell, the UE 103 is automatically set so that the camera function cannot be used even if the user does not set it. Thus, in this embodiment, taking pictures can be prohibited and a copyright of an artist can be protected in a concert hall.

When the value of the specific operation cell information 410 indicates specific operation cell C, the data managing unit 303 performs "power OFF" that is set as a specific operation in the management information table (step S1003), and the process ends. Accordingly, when being located in the specific cell, the UE 103 is automatically turned OFF even if the user does not set it. Thus, emission of unnecessary radio waves can be prevented, so that malfunction of medical equipment can be prevented in a hospital. Also, in this embodiment, various specific operations can be performed in the UE 103 in units of cells of the BTS 102.

When the value of the specific operation cell information 410 indicates a non-specific operation cell (no specific operation is performed), the data managing unit 303 determines whether a specific operation is being performed (step S1011). If no specific operation is being performed ("NO" in step S1011), the data managing unit 303 performs nothing and the process ends. If a specific operation is being performed ("YES" in step S1011), the data managing unit 303 cancels the specific operation that is being performed (step S1012), sets non-specific operation cell to the specific operation cell information in the management information table (step S1013), and the process ends. If the UE 103 goes out of a cell where a specific operation is performed and enters a non-specific operation cell, the specific operation performed in the UE 103 is canceled.

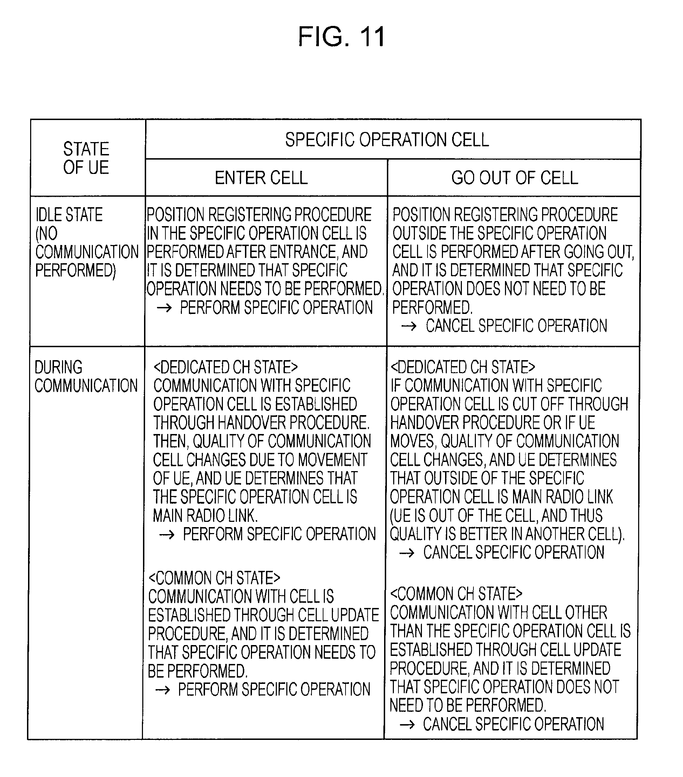

Hereinafter, operations of the UE in each communication state and each location state with respect to a specific operation cell are described with reference to Fig. 11.

### In Idle State

In one embodiment, after the UE 103 has entered a specific operation cell in an idle state, a position registering procedure in the specific operation cell is performed. It is then determined that a specific operation needs to be performed, and the UE 103 performs the specific operation. On the other hand, after the UE 103 has gone out of the specific operation cell, a position registering procedure is performed outside the specific operation cell. Thereafter, it is determined that a specific operation does not need to be performed, and the UE 103 cancels the specific operation.

### During Communication In A Dedicated Channel State

After the UE 103 has entered a specific operation cell while the UE 103 is performing communication in the dedicated channel state, communication with the specific operation cell is established through a handover procedure. Then, movement of the UE 103 causes a change in quality of the communication cell, the UE 103 determines that the specific operation cell is "Main Radio Link," and the UE 103 performs a specific operation. After the UE 103 has gone out of the specific operation cell, if communication with the specific operation cell is cut off through a handover procedure or if the UE 103 moves, the quality of the communication cell changes, the UE 103 determines that the outside of the specific operation cell is "Main Radio Link", and the UE 103 cancels the specific operation.

### During Communication In A Common Channel State

According to one aspect of the present invention, after the UE 103 has entered a specific operation cell while the UE 103 is performing communication in the common channel state, communication with the specific operation cell is established through a cell update procedure. It is preferably determined that a specific operation needs to be performed, and the UE 103 performs the specific operation. After the UE 103 has gone out of the specific operation cell, communication with a cell other than the specific operation cell is established through the cell update procedure. If it is determined that a specific operation does not need to be performed, the UE 103 cancels the specific operation.

In the above-described embodiment, a function of the UE 103 is stopped in any case. However, a function can be actively operated depending on a cell. For example, in a place of a lecture in a specific area, the silent mode function or the camera function of the UE 103 can be operated by time, *e.g.*, during break time. If the function is stopped, the stop is canceled so that a normal function can be used. In this way, a specific operation can be controlled without knowledge of the user.

According to this embodiment, if a cell where the UE 103 is located is a specific cell, the RNC 101 may control the UE 103 via the BTS 102 so that a specific operation is performed while the UE 103 is located in the specific cell. For example, while the UE 103 is located in a specific cell, the RNC 101 allows the saline mode function of the UE 103 to be performed. Accordingly, in this embodiment, a specific operation required in a cell can be performed in all UE located in the cell without knowledge of the user.

According to this embodiment, the RNC 101 can allow the UE 103 located in a specific cell to perform a predetermined specific operation. The specific operation can be set in each cell, and can be performed in all UE while the UE is in the cell without any operation by the user.

More specifically, according to this embodiment, under an environment where all users located in a specific cell request execution of a common operation, such as setting of the silent mode function or temporary prohibition of the camera function, to the UE 103, setting or canceling of the specific operation can be enabled for all the users located in the cell without knowledge of the users.

With this configuration, a desired operation of the UE 103 in a specific cell (setting of a silent mode or temporary prohibition of use of a camera function) can be uniformly performed for an organizer of an event held in the specific cell. Also, the user of the UE 103 does not need to consciously perform a specified specific operation.

## Claims

1. User equipment comprising:
a transmitting/receiving unit that transmits/receives information to/from a base transceiver station of a cell where the user equipment is located; and
a control unit that controls specific operation while the user equipment is located in the cell by receiving specific operation information to start the specific operation via the transmitting/receiving unit.

2. The user equipment according to claim 1,
wherein the transmitting/receiving unit transmits/receives a message in accordance with entrance or exit of the user equipment to/from the cell and whether communication is being performed, and
wherein the control unit controls the specific operation corresponding to the specific operation information by reading the specific operation information included in the message.

3. The user equipment according to claim 2,
wherein the specific operation information is bit data using an area of the message transmitted/received to/from the basic transceiver station, and
wherein the control unit performs the specific operation that is set in accordance with a value indicated by the bit data.

4. The user equipment according to any preceding claim,
wherein the control unit stops a predetermined function corresponding to the specific operation information as the specific operation.

5. A radio network controller comprising:
a transmitting/receiving unit that transmits/receives information to/from user equipment via a base transceiver station of a cell where the user equipment is located; and
a control unit that performs control to allow the user equipment to perform a specific operation while the user equipment is located in a predetermined specific cell in accordance with transmission/reception of information via the transmitting/receiving unit.

6. The radio network controller according to claim 5,
wherein the transmitting/receiving unit transmits/receives a message to/from the user equipment in accordance with entrance or exit of the user equipment to/from the cell and whether communication is being performed, and
wherein the control unit allows the user equipment to perform the specific operation corresponding to specific operation information that is included in the message.

7. The radio network controller according to claim 6,
wherein the specific operation information is bit data using an area of the message transmitted/received to/from the basic transceiver station, and
wherein the control unit sets a value of the bit data corresponding to the specific operation.

8. The radio network controller according to claim 5, 6, or 7,
wherein the control unit stops a predetermined function of the user equipment as the specific operation.

9. A method for controlling user equipment, comprising:
controlling an operation of a function of the user equipment in accordance with a cell where the user equipment is located;
transmitting/receiving a message between the user equipment and a radio network controller at entrance or exit of the user equipment to/from the cell; and
performing a specific operation of a function of the user equipment based on specific operation information included in the message while the user equipment is located in a cell.

10. Software which, when executed by a processor of user equipment in a radio communication system, performs the method of claim 9.
